# EUROPEAN PATENT APPLICATION

(11) **EP 0 589 222 A2**
(43) Date of publication of application: **30.03.1994**
(21) Application number: 93113509.9
(22) Date of filing: 24.08.1993
(51) Int. Cl.: D04H 13/00

(54) **Hydrosonically bonded nonwoven/paper material and process for forming the same**

(30) Priority: 23.09.1992 US 950100
(71) Applicant: KIMBERLY-CLARK CORPORATION, Neenah Wisconsin 54957-0349 (US)
(72) Inventor: Jameson, Lee Kirby, Roswell, Georgia 30075 (US); Cohen, Bernard, Berkley Lake, Georgia 30136 (US)
(74) Representative: Grünecker, Kinkeldey, Stockmair & Schwanhäusser Anwaltssozietät

(57) **Abstract**

The invention is directed toward a hydrosonically bonded multilayer material which includes at least one nonwoven web layer and one paper layer. The invention is also directed toward a process for forming the multilayer material.

## Description

### RELATED APPLICATIONS

Other patent applications dealing with applications of hydrosonics by the present inventors include U.S. patent application serial number 07/769,050 entitled "Hydrosonically Microapertured Thin Thermoset Sheet Materials"; U.S. patent application serial number 07/769,047 entitled "Hydrosonically Microapertured Thin Thermoplastic Sheet Materials"; U.S. patent application serial number 07/768,782 entitled "Pressure Sensitive Valve System and Process For Forming Said System"; U.S. patent application serial number 07/768,494 entitled " Hydrosonically Embedded Soft Thin Film Materials and Process For Forming Said Materials"; U.S. patent application number 07/768,788 entitled "Hydrosonically Microapertured Thin Naturally Occurring Polymeric Sheet Materials and Method of Making the Same"; U.S. patent application serial number 07/769,048 entitled "Hydrosonically Microapertured Thin Metallic Sheet Materials"; U.S. patent application serial number 07/769,045 entitled "Process For Hydrosonically Microaperturing Thin Sheet Materials"; and U.S. patent application serial number 07/767,727 entitled "Process For Hydrosonically Area Thinning Thin Sheet Materials". This first group of applications was filed on September 30, 1991. All of these applications are hereby incorporated by reference.

Additional applications, by the present inventors, directed to applications of hydrosonic energy which are being filed contemporaneously with the present application include U.S patent application serial number entitled "Process for Forming Electret Filter Media and Electret Filter Media"; U.S. patent application serial number entitled "Method for Forming a Net-Like Material From a Thermoplastic Film"; U.S. patent application serial number entitled "Process for Hydrosonically Area Embossing Thin Thermoplastic Film Materials and Products Formed Thereby"; and U.S. patent application serial number entitled "Method for Forming Ultra-Microapertures in Thin Thermoplastic Film Materials and Products Formed Thereby". All of these applications are hereby incorporated by reference.

### FIELD OF THE INVENTION

The field of the present invention encompasses multilayer materials and processes for their formation.

### BACKGROUND OF THE INVENTION

Ultrasonics is basically the science of the effects of sound vibrations beyond the limit of audible frequencies. Ultrasonics has been used in a wide variety of applications. For example, ultrasonics has been used for (1) dust, smoke and mist precipitation; (2) preparation of colloidal dispersions; (3) cleaning of metal parts and fabrics; (4) friction welding; (5) the formation of catalysts; (6) the degassing and solidification of molten metals; (7) the extraction of flavor oils in brewing; (8) electroplating; (9) drilling hard materials; (10) fluxless soldering and (10) nondestructive testing such as in diagnostic medicine.

The object of high power ultrasonic applications is to bring about some permanent physical change in the material treated. This process requires the flow of vibratory power per unit of area or volume. Depending on the application, the power density may range from less than a watt to thousands of watts per square centimeter. Although the original ultrasonic power devices operated at radio frequencies, today most operate at 20-69 kilohertz (kHz).

The piezoelectric sandwich-type transducer driven by an electronic power supply has emerged as the most common source of ultrasonic power; the overall efficiency of such equipment (net acoustic power per electric-line power) is typically greater than 70%. The maximum power from a conventional transducer is inversely proportional to the square of the frequency. Some applications, such as cleaning, may have many transducers working into a common load.

Other, more particular areas where ultrasonic vibratory force has been utilized are in the areas of thin nonwoven webs and thin films. For example, ultrasonic force has been used to bond or weld nonwoven webs. See, for example, U.S. patent numbers 3,575,752 to Carpenter, 3,660,186 to Sager et al., 3,966,519 to Mitchell et al. and 4,695,454 to Savovitz et al. which disclose the use of ultrasonics to bond or weld nonwoven webs. U.S. patent number 3,488,240 to Roberts, describes the use of ultrasonics to bond or weld thin films such as oriented polyesters.

Ultrasonic force has also been utilized to aperture nonwoven webs. See, for example, U.S. patent numbers 3,949,127 to Ostermeier et al. and 3,966,519 to Mitchell et al.. Ultrasonic force has also been used to aperture thin film material. See, for example, U. S. patent number 3,756,880 to Graczyk and U.K. patent application number 2,124,134 to Blair.

As has previously been stated, those in the art had recognized that ultrasonics could be utilized to form apertures in nonwoven webs. See, U.S. patent to Mitchell, et al.. Additionally, the Mitchell et al. patent discloses that the amount of ultrasonic energy being subjected to a nonwoven web could be controlled by applying enough of a liquid to the area at which the ultrasonic energy was being applied to the nonwoven web so that the liquid was present in uncombined form. Importantly, the Mitchell, et al. patent states that the liquid is moved by the action of the ultrasonic force within the nonwoven web to cause aperture formation in the web by fiber rearrangement and entanglement. The Mitchell et al. patent also states that, in its broadest aspects, since these effects are obtained primarily through physical movement of fibers, the method of their invention may be utilized to bond or increase the strength of a wide variety of fibrous webs.

Lastly, Mitchell et al. also states that webs and laminates produced in accordance with their invention find wide utility as base materials for disposable nonwoven wipes, disposable or limited use garments, bed linens, and as liners for incontinent care products or infant diapers and the like. Example 10 of the Mitchell et al. patent discloses the use of the Mitchell et al. process on the combination of an air-laid web and a scrim material. See also Example 11 of Mitchell et al. for the use of the Mitchell et al. process on multiple layered materials.

### DEFINITIONS

As used herein, the term "hydrosonics" refers to the application of ultrasonic vibrations to a material where the area of such application has had a liquid applied thereto to the extent that the liquid is present in sufficient quantity to generally fill the gap between the tip of the ultrasonic horn which applies the ultrasonic vibrations to the material and the surface of the material.

As used herein, the term "hydrosonic bonding" refers to the use of "hydrosonics" to effect the bonding, i.e. joining of multiple layers together to form a multilayer material. Hydrosonic bonding results from an application of hydrosonic energy to effect a displacement of the fibers of at least one layer of a multilayer structure so that the fibers which are displaced are driven into and, sometimes, through another layer of the structure. Generally speaking, with a (spunbond/paper/spunbond) structure, entangling occurs between the two spunbonded layers and, in some cases, with the fibers present in the paper layer. Hydrosonic bonding may also effect some thermal bonding in that the liquid may be driven away from or excluded from portions of the entangling area by the application of the ultrasonic energy. This action allows for the possibility of the fibers of one or more of the layers to become softened, even melt, and thus become thermally bonded with fibers in another layer.

As used herein, the term "paper layer" refers to a cellulose sheet which is used "as is" or is debonded. Debonding may be accomplished by a standard mechanical debonding procedure such as embossing or any procedure which pulls the cellulose fibers apart. These procedures are well known to those in the art.

As used herein, the term "nonwoven web" refers to a web of material which has been formed without use of weaving processes which produce a structure of individual fibers or threads which are interwoven in an identifiable repeating manner. Nonwoven webs have been, in the past, formed by a variety of processes such as, for example, meltblowing and spunbonding processes.

As used herein the term "necked" material refers to any material which has been constricted in at least one dimension by applying a tensioning force in a direction that is perpendicular to the desired direction of necking. Processes which may be utilized to effect necking include, for example, tenter frame and drawing processes.

As used herein the term "necked-bonded" refers to a multi-layer material which included a necked material with the necked material having been in the necked configuration at the time it was bonded to at least one other layer of the multi-layer material to form the multi-layer material.

### OBJECTS OF THE INVENTION

Accordingly, it is a general object of the present invention to provide a multilayer material including a surface layer formed from a nonwoven web; and a paper layer where the layers of the multilayer material are joined together by hydrosonic bonding.

Still further objects and the broad scope of applicability of the present invention will become apparent to those of skill in the art from the details given hereinafter. However, it should be understood that the detailed description of the presently preferred embodiments of the present invention is given only by way of illustration because various changes and modifications well within the spirit and scope of the invention will become apparent to those of skill in the art in view of this detailed description.

### SUMMARY OF THE INVENTION

In response to the foregoing problems and difficulties encountered by those in the art, we have developed a multilayer material including a surface layer formed from a nonwoven web; and a paper layer. Importantly, the layers of the multilayer material are joined together by hydrosonic bonding.

In one embodiment, the multilayer material includes: a first surface layer formed from a nonwoven web; an interior paper layer; and a second surface layer formed from a nonwoven web. All of the layers are joined together by hydrosonic bonding.

In yet another embodiment the multilayer material has elastic characteristics and includes: a first surface layer formed from a necked-bonded spunbonded web; an interior layer formed from a debonded paper material; and a second surface layer formed from a necked-bonded spunbonded web. Likewise, all of the layers are joined together by hydrosonic bonding.

In some of the embodiments, the nonwoven web may be selected from the group including a meltblown web or a spunbonded web.

In some of the embodiments, the nonwoven web may be formed from a material selected from the group including one or more polyolefins, polyesters, nylons, caprolactams, polyvinyl alcohol or thermoplastic elastomers. For example, the nonwoven web may be formed from a spunbonded polyethylene.

Typically, the multilayer material may have an interlayer cohesion of at least about 1 kilogram per square inch. For example, the multilayer material may have an interlayer cohesion of at least about 2 kilograms per square inch.

The invention is also directed toward a process for forming a multilayer material including the steps of: (1) providing a nonwoven web; (2) juxtaposing a paper layer upon the nonwoven web; and (3) hydrosonically bonding the nonwoven web to the paper layer.

In some embodiments the process may include the additional step of juxtaposing a second nonwoven web upon the surface of the paper layer prior to the hydrosonic bonding step.

### THE FIGURES

Figure I is a schematic representation of apparatus which utilizes hydrosonic energy to bond the multilayer material of the present invention.

Figure II is a cross sectional view of the transport mechanism depicted in Figure I taken along lines A-A in Figure I.

Figure III is a schematic representation of the dotted line area depicted in Figure I where the ultrasonic vibrations are applied to the nonwoven web/paper layer combination.

### DETAILED DESCRIPTION OF THE INVENTION

Turning now to the figures where like reference numerals represent like structure and, in particular to Figure I which is a schematic representation of an apparatus which can carry out the method of the present invention, it can be seen that the apparatus is generally represented by the reference numeral 10. In operation, a supply roll 12 provides a nonwoven web 13 and a second supply roll 14 provides a paper layer 15. While Figure I depicts the web 13 being juxtaposed on top of the paper layer 15, this order of juxtaposition can be reversed. The web 13 and the layer 15 both should have an average thickness of about ten (10) mils or less. Additionally, generally speaking, the average thickness of both the web 13 and the layer 15 will be at least about 0.25 mil. For example, the average thickness of the web 13 and the layer 15 may range from about 0.25 mil to about 5 mils. More particularly, the average thickness of the web 13 and the layer range from about 0.25 mil to about 2 mils. Even more specifically, the average thickness of the web 13 and the layer 15 may range from about 0.5 mil to about 1 mil.

The nonwoven web 13 may be, for example, a meltblown web or a spunbonded web. The web 13 may be formed from a material selected from one or more of, for example, a material selected from the group including of one or more of polyolefins; such as, for example, linear low density polyethylene; polyesters; nylons; or thermoplastic elastomers such as, for example, polyurethanes. The nonwoven web 13 may be formed from a blend of one or more thermoplastic materials.

Typically, the paper layer 15 is formed by conventional paper forming methods which are well known to those in the art.

The web 13 and the paper layer 15 are transported to a first nip 16 formed by a first transport roll 18 and a first nip roller 20 by the action of an endless transport mechanism 22 which moves in the direction indicated by the arrow 24. The transport mechanism 22 is driven by the rotation of the first transport roller 18 in conjunction with a second transport roller 26 which, in turn are driven by a conventional power source, not shown.

Figure II is a cross sectional view of the transport mechanism 22 taken along lines A-A in Figure I. Figure II discloses that the transport mechanism 22 includes a heavy duty transport wire mesh screen 28. Heavy duty mesh wire screens 28 of this type may be made from a variety of materials such as, for example, plastics, nylons or polyesters, and are readily available to those in the art.

From the first nip 16 the web 13 and the layer 15 are transported by the transport mechanism 22 over a tension roll 36 to an area 38 (defined in Figure I by the dotted lined circle) where the web 13 and the layer 15 are subjected to ultrasonic vibrations.

The assembly for subjecting the web 13 and the layer 15 to the ultrasonic vibrations is conventional and is generally designated at 40. The assembly 40 includes a power supply 42 which, through a power control 44, supplies power to a piezoelectric transducer 46. As is well known in the art, the piezoelectric transducer 46 transforms electrical energy into mechanical movement as a result of the transducer's vibrating in response to an input of electrical energy. The vibrations created by the piezoelectric transducer 46 are transferred, in conventional manner, to a mechanical movement booster or amplifier 48. As is well known in the art, the mechanical movement booster 48 may be designed to increase the amplitude of the vibrations (mechanical movement) by a known factor depending upon the configuration of the booster 48. In further conventional manner, the mechanical movement (vibrational energy) is transferred from the mechanical movement booster 48 to a conventional knife edge ultrasonic horn 50. It should be realized that other types of ultrasonic horns 50 could be utilized. For example, a rotary type ultrasonic horn could be used. The ultrasonic horn 50 may be designed to effect yet another boost or increase in the amplitude of the mechanical movement (vibrations) which is to be applied to the thin thermoplastic sheet material 14. Lastly, the assembly includes an actuator 52 which includes a pneumatic cylinder, not shown. The actuator 52 provides a mechanism for raising and lowering the assembly 40 so that the tip 54 of the ultrasonic horn 50 can apply tension to the transport mechanism 22 upon the assembly 40 being lowered. It has been found that it is necessary to have some degree of tension applied to the transport mechanism 22 upon the lowering of the assembly for proper application of vibrational energy to the web 13 and the layer 15. One desirable aspect of this tensioned arrangement is that the need to design a finely toleranced gap between the tip 54 of the horn 50 and the transport mechanism 22 is not necessary.

Figure III is a schematic representation of the area 38 where the ultrasonic vibrations are applied to the web 13 and the layer 15. As can be seen in Figure III, the transport mechanism 22 forms an angle 56 with the tip 54 of the ultrasonic horn 50. While some hydrosonic bonding will occur if the angle 56 is as great as 45 degrees, it has been found that it is desirable for the angle 56 to range from about 5 degrees to about 15 degrees. For example, the angle 56 may range from about 7 to about 13 degrees. More particularly, the angle 56 may range from about 9 to about 11 degrees.

Figure III also illustrates that the transport mechanism 22 is supported from below by the first tension roll 36 and a second tension roll 58. Positioned somewhat prior to the tip 54 of the ultrasonic horn 50 is a spray nozzle 60 which is configured to apply a liquid 62 to the surface of the web 13 or the layer 15 (whichever is on top) just prior to their being subjected to ultrasonic vibrations by the tip 54 of the ultrasonic horn 50. The liquid 62 desirably may be selected from the group including one or more of water; mineral oil; a chlorinated hydrocarbon; ethylene glycol; or a solution of 50 volume percent water and 50 volume percent 2 propanol. For example, in some embodiments the chlorinated hydrocarbon may be selected from the group including 1,1,1 trichloroethane or carbon tetrachloride.

It should be noted that the wedge-shaped area 64 formed by the tip 54 of the ultrasonic horn 50 and the transport mechanism 22 should be subjected to a sufficient amount of the liquid 62 for the liquid 62 to act as both a heat sink and a coupling agent for the most desirable results. Positioned below the transport mechanism 22 in the area where the tip 54 of the ultrasonic horn 50 is located is a liquid collection tank 66. (See Figure I.) The liquid collection tank 66 serves to collect liquid 62 which has been applied to the top surface of the web 13 (web 13 is fed to the nip 16 as the upper layer in Figure I) and which has either been driven through the web 13 and the layer 15 and/or the transport mechanism 22 or over the edges of the transport mechanism 22 by the action of the vibrations of the tip 54 of the ultrasonic horn 50. Liquid 62 which is collected in the collection tank 66 is transported by tubing 68 to a liquid holding tank 70.

Figure I illustrates that the liquid holding tank 70 contains a pump 72 which, by way of additional tubing 74, supplies the liquid 62 to the liquid spray nozzle 60. Accordingly, the liquid 62 may be recycled for a considerable period of time.

As the web 13 and the layer 15 are passed beneath the tip 54 of the ultrasonic horn 50, the fibers in both of the web 13 and the layer 15 are rearranged by the application of hydrosonic energy and physical bonding of the web 13 to the layer 15 is effected as a result of the fibers of the web 13 extending into and wrapping around the fibers of the paper layer 15. Additionally, it is believed that the fibers of the paper layer 15 extend into and wrap around the fibers of the web 13.

While the mechanism of action may not be fully understood and the present application should not be bound to any particular theory or mechanism of action, it is believed that the presence of the liquid 62 in the wedge-shaped area 64 during operation of the ultrasonic horn 50 accomplishes two separate and distinct functions. First, the presence of the liquid 62 allows the liquid 62 to act as a heat sink. Secondly, the presence of the liquid 62 in the wedge-shaped area 64 allows the liquid 62 to act as a coupling agent in the application of the vibrations from the ultrasonic horn 50 to the web 13 and the layer 15. Additionally, the presence of the liquid results in the rearrangement of the fibers of the web 13 and layer 15 to effect a physical joining of the web 13 to the layer 15.

The degree of hydrosonic bonding will vary with the amount of hydrosonic energy applied to the web 13 and the layer 15, per unit area per unit time. As has been stated earlier, hydrosonic bonding may also effect some thermal bonding in that, as a result of the porosity of the web 13 and the layer 15, the liquid may be driven away from or excluded from portions of the entangling area by the application of the ultrasonic energy. The exclusion effect appears to be most pronounced in the area directly above the knuckles of the wire 28 or any other equivalent raised area. This action allows for the possibility that the fibers of the web 13 may become softened, even melt, and thus become thermally bonded with fibers in the layer 15.

Additional bonding, if desired, of the web 13 to the layer 15, may be effected by placing an adhesive in the liquid 62. This action results in the permeation of the web 13 and the layer 15 with the adhesive. Generally speaking, this action is not utilized because of the lowering of the hand and drape of the resultant material.

The range of line speeds that usually yields hydrosonic bonding varies with the materials utilized to form the web 13 and the layer 15 and the material used as the liquid 62. If the web 13 is a spunbonded polypropylene having a basis weight of about 0.80 ounces per square yard and the paper layer has a basis weight of about 1.50 ounces per square yard and is formed from secondary fibers, typical line speeds which usually yield satisfactory hydrosonic bonding for a wide variety of liquids range from about 2 to about 10 feet per minute. If water is used as the liquid with these materials, typical line speeds which usually yield satisfactory hydrosonic bonding range from about 2 to about 10 feet per minute. In some embodiments it may be necessary to subject the web 13 and the layer 15 to multiple passes through the apparatus 10 in order to effect satisfactory hydrosonic bonding. In such situations the web 13 and the layer 15 will initially only be lightly bonded together. However, after two or more passes through the apparatus 10, satisfactory hydrosonic bonding will be effected.

Another feature of the present invention is the fact that hydrosonic bonding can be effected in a predesignated area or areas of juxtaposition of the web 13 and the layer 15. This can be accomplished in a number of ways. For example, the juxtaposed web 13/layer 15 arrangement may be subjected to ultrasonic vibrations only at certain areas, thus, hydrosonic bonding would occur only in those areas. Alternatively, the entire web 13/layer 15 arrangement could be subjected to ultrasonic vibrations with the pattern anvil having raised areas only at certain locations and otherwise being flat. Accordingly, hydrosonic bonding would be effected only in those areas which correspond to areas on the pattern anvil having raised areas.

A number of important observations about the process may now be made. For example, it should be understood that the presence of the liquid 62 is highly important to the present inventive process which uses the liquid 62 as a coupling agent and as a mechanism to effect rearrangement of the fibers of the web 13 and the layer 15. Because a coupling agent is present, the fibers may be rearranged without being melted by the application of hydrosonic energy. Additionally, the presence of the transport mechanism 22 or its equivalent is necessary in order to provide an anvil mechanism against which the fibers of the web 13 and the layer 15 may be worked (rearranged) by the action of the tip 54 of the ultrasonic horn 50. Because the vibrating tip 54 of the ultrasonic horn 50 is believed to form small vortexes in the liquid 62 which act as the agent of rearrangement of the fibers of the web 13 and the layer 15, it should be readily recognized that a certain degree of tension must be placed upon the transport mechanism 22 by the downward displacement of the ultrasonic horn 50. If there is little or no tension placed upon the transport mechanism 22, the hydrosonic energy will be dissipated by the greater volume of liquid 62 which it must act upon to effect fiber rearrangement. Additionally, it should be noted that because the transport mechanism 22 forms the resistance that the ultrasonic horn 50 works against, it may be referred to as an anvil combination. If insufficient tension is placed upon the arrangement, the anvil combination will not be able to perform its function. It should be easily recognized by those in the art that the function of the anvil can be accomplished by other arrangements than the heavy duty mesh screen 28. For example, the anvil could be a flat plate with raised portions acting to direct the microaperturing force of the ultrasonic horn 50. Alternatively, the anvil could be a cylindrical roller having raised areas. If the anvil is a cylindrical roller with raised areas, it is desirable for the anvil to be wrapped or coated with or made from a resilient material. Where the anvil is the heavy duty transport wire 28, the resiliency is provided by the fact that the wire 28 is unsupported directly below the point of application of ultrasonic vibrations to the wire 28.

In some embodiments it may be desirable to feed additional webs 13 or layers 15 into the nip 16 and thus have more than a two-layered final product. For example, a second nonwoven web 13 could be fed to the nip 16 below the paper layer 15. The final product would be a three-layered product having two nonwoven web 13 surface layers and an internal paper layer 15. Other arrangements of nonwoven web 13 and paper layers 15 will be readily apparent to those of skill in the art.

The invention will now be discussed with regard to specific examples which will aid those of skill in the art in a full and complete understanding thereof.

### EXAMPLE I

A web of 0.80 ounce per square yard basis weight spunbonded polypropylene untreated diaper liner material obtained from Kimberly-Clark Corporation of Dallas, Texas, was cut into a length of about 8 inches and a width of about 10 inches. A piece of paper having a basis weight of about 1.50 ounces per square yard formed from secondary fibers and obtained from the Southeast Paper Company of Dublin, Georgia, was cut into a length of about 8 inches and a width of about 10 inches. The juxtaposed samples were subjected to hydrosonic bonding treatment in accordance with the present invention.

A model 1120 power supply obtained from the Branson Company of Danbury, Connecticut, was utilized. This power supply, which has the capacity to deliver 1,300 watts of electrical energy, was used to convert 115 volt, 60 cycle electrical energy to 20 kilohertz alternating current. A Branson type J4 power level control, which has the ability to regulate the ultimate output of the model 1120 power supply from 0 to 100%, was connected to the model 1120 power supply. In this example, the power level control was set at 100%. The actual amount of power consumed was indicated by a Branson model A410A wattmeter. This amount was about 1,500 watts.

The output of the power supply was fed to a model 402 piezoelectric ultrasonic transducer obtained from the Branson Company. The transducer converts the electrical energy to mechanical movement. At 100% power the amount of mechanical movement of the transducer is about 0.8 micrometers.

The piezoelectric transducer was connected to a mechanical movement booster section obtained from the Branson Company. The booster is a solid titanium metal shaft with a length equal to one-half of the wave length of the 20 kilohertz resonant frequency. Boosters can be machined so that the amount of mechanical movement at their output end is increased or decreased as compared to the amount of movement of the transducer. In this example the booster increased the amount of movement and has a gain ratio of about 1:2.5. That is, the amount of mechanical movement at the output end of the booster is about 2.5 times the amount of movement of the transducer.

The output end of the booster was connected to an ultrasonic horn obtained from the Branson Company. The horn in this example is made of titanium with a working face of about 9 inches by about 1/2 inch. The leading and trailing edges of the working face of the horn are each curved on a radius of about 1/8 inch. The horn step area is exponential in shape and yields about a two-fold increase in the mechanical movement of the booster. That is, the horn step area has about a 1:2 gain ratio. The combined increase, by the booster and the horn step area, in the original mechanical movement created by the transducer yields a mechanical movement of about 4.0 micrometers.

The forming table arrangement included a small forming table which was utilized to transport and support the spunbonded polypropylene. The forming table included two 2-inch diameter idler rollers which were spaced about 12 inches apart on the surface of the forming table. A transport mesh belt encircles the two idler rollers so that a continuous conveying or transport surface is created. The transport mesh belt is a 24 by 18 mesh web of bronze strands. The belt is about 10 inches wide and is raised above the surface of the forming table.

The transducer/booster/horn assembly, hereinafter the assembly, is secured in a Branson series 400 actuator. When power is switched on to the transducer, the actuator, by means of a pneumatic cylinder with a piston area of about 4.4 square inches, lowers the assembly so that the output end of the horn contacts the juxtaposed spunbonded polypropylene web and the paper layer which are to be hydrosonically bonded. The spunbonded polypropylene web is positioned on top of the paper layer. The actuator also raises the assembly so that the output end of the horn is removed from contact with the spunbonded polypropylene web when power is switched off.

The assembly is positioned so that the output end of the horn is adapted so that it may be lowered to contact the transport mesh belt between the two idler rollers.

The forming table arrangement also included a liquid circulating system. The circulating system includes a liquid reservoir tank, a liquid circulating pump which may conveniently be located within the tank, associated tubing for transporting the liquid from the tank to a slotted boom which is designed to direct a curtain of liquid into the juncture of the output end of the horn and the web and layer.

In operation, the assembly was positioned so that the output end of the horn was at an angle of from about 10 to 15 degrees to the web/layer. Accordingly, a wedge shaped chamber was formed between the output end of the horn and the web/layer combination. It is into this wedge shaped chamber that the liquid, in this example water, at room temperature, was directed by the slotted boom.

It should be noted that the actuator was positioned at a height to insure that, when the assembly is lowered, the downward movement of the output end of the horn is stopped by the tension of the transport mesh before the actuator reaches the limit of its stroke. In this example, actuating pressure was adjusted to 15 pounds per square inch as read on a pressure gauge which is attached to the pneumatic cylinder of the actuator. This adjustment results in a total downward force of 66 pounds. (15 psi times 4.4 square inches of piston area equals 66 pounds of force.)

The sequence of operation was (1) the liquid pump was switched on and the area where the output end of the horn was to contact the web/layer combination was flooded with water; (2) the transport mesh conveyor system was switched on and the juxtaposed web and layer combination started moving at 6.3 feet per minute; and (3) power to the assembly was supplied and the assembly was lowered so that the output end of the horn contacted the web while the combination continued to pass under the output end of the horn until the end of the combination was reached. The reading on the A410A wattmeter during the process is an indication of the energy required to maintain maximum mechanical movement at the output end of the horn while working against the combined mass of the water, the web/layer combination and the transport wire.

This example yielded a hydrosonically bonded multilayer material having an interlayer cohesion of about 1.43 kilograms per square inch.

Other data, which are the average values obtained for five samples made in accordance with Example I are reproduced in Table I, below.

**TABLE I**

| | CD Avg. | S.D. | MD Avg. | S.D. |
|---|---|---|---|---|
| Peak Load | 6.894 | .763 | 3.128 | .318 |
| % Elongation | 25.100 | 4.715 | 42.440 | 7.921 |
| Peak Energy | 3.756 | 1.118 | 3.276 | .863 |

### EXAMPLE II

Example I was repeated with the exception that the layers were passed through the hydrosonic bonder five (5) times as compared to only one pass in Example I. Additionally, the line speed was adjusted to be 5.5 feet per minute and a 20 by 20 polywire was used as the transport wire. About 800 watts of energy was required for each pass. Also, the paper was in a debonded form in this example whereas the paper layer of Example I was in bonded form.

The cohesion value for the resulting material was about 1.47 kilograms per square inch. This sample showed about 20% stretch and about 50% recovery. The recovery remained after 15 stretching cycles.

The uses to which the hydrosonically bonded materials of the present invention may be put include garments and wipers. Important characteristics of the hydrosonically bonded multilayer material of the present invention include breathability, liquid uptake, dyeability and elasticity.

It is to be understood that variations and modifications of the present invention may be made without departing from the scope of the invention. For example, in some embodiments the use of multiple ultrasonic horns aligned abreast or sequentially may be desirable. It is also to be understood that the scope of the present invention is not to be interpreted as limited to the specific embodiments disclosed herein, but only in accordance with the appended claims when read in light of the foregoing disclosure.

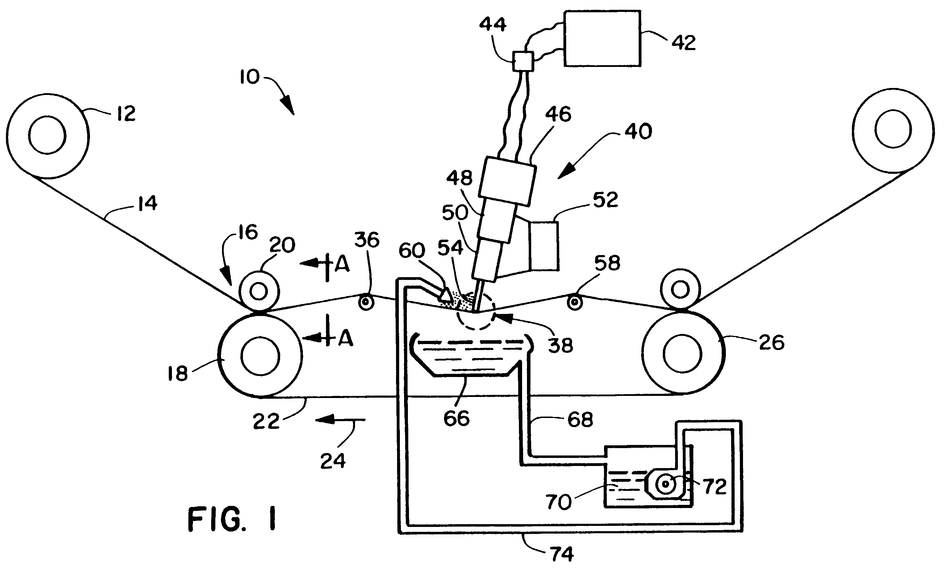

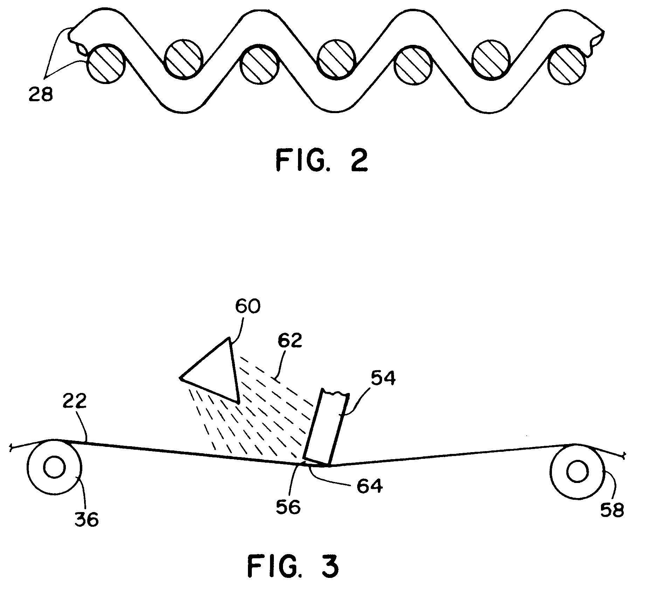

## Claims

1. A multilayer material comprising:
a surface layer formed from a nonwoven web; and
a paper layer; and
wherein the layers of the multilayer material are joined together by hydrosonic bonding.

2. The multilayer material of claim 1, wherein the nonwoven web is selected from the group consisting of a meltblown web or a spunbonded web.

3. The multilayer material of claim 1, wherein the nonwoven web is a spunbonded web.

4. The multilayer material of claim 1, wherein the nonwoven web is formed from a material selected from the group consisting of one or more polyolefins, polyesters, nylons, caprolactams, polyvinyl alcohol or thermoplastic elastomers.

5. The multilayer material of claim 1, wherein the nonwoven web is formed from a spunbonded polyethylene.

6. The multilayer material of claim 1 having a interlayer cohesion of at least about 1 kilogram per square inch.

7. The multilayer material of claim 1 having an interlayer cohesion of at least about 2 kilograms per square inch.

8. A multilayer material comprising:
a first surface layer formed from a nonwoven web;
an interior paper layer; and
a second surface layer formed from a nonwoven web; and
wherein the layers of the multilayer material are joined together by hydrosonic bonding.

9. The multilayer material of claim 8, wherein each of the nonwoven webs is selected from the group consisting of a meltblown web or a spunbonded web.

10. The multilayer material of claim 8, wherein each of the nonwoven webs is a spunbonded web.

11. The multilayer material of claim 8, wherein each of the nonwoven webs is formed from a material selected from the group consisting of one or more polyolefins, polyesters, nylons, caprolactams, polyvinyl alcohol or thermoplastic elastomers.

12. The multilayer material of claim 8, wherein each of the nonwoven webs is formed from a spunbonded polyethylene.

13. The multilayer material of claim 8 having an interlayer cohesion of at least about 1 kilogram per square inch.

14. The multilayer material of claim 8 having an interlayer cohesion of at least about 2 kilograms per square inch.

15. An elastic multilayer material comprising:
a first surface layer formed from a neck-bonded spunbonded web;
an interior layer formed from a debonded paper material;
a second surface layer formed from a neck-bonded spunbonded web; and
wherein the layers of the multilayer material are joined together by hydrosonic bonding.

16. The multilayer material of claim 15, wherein each of the nonwoven webs is selected from the group consisting of a meltblown web or a spunbonded web.

17. The multilayer material of claim 15, wherein each of the nonwoven webs is a spunbonded web.

18. The multilayer material of claim 15, wherein each of the nonwoven webs is formed from a material selected from the group consisting of one or more polyolefins, polyesters, nylons, caprolactams, polyvinyl alcohol or thermoplastic elastomers.

19. The multilayer material of claim 15, wherein each of the nonwoven webs is formed from a spunbonded polyethylene.

20. The multilayer material of claim 15 having an interlayer cohesion of at least about 1 kilogram per square inch.

21. The multilayer material of claim 15 having an interlayer cohesion of at least about 2 kilograms per square inch.

22. A process for forming a multilayer material comprising the steps of:
providing a nonwoven web;
juxtaposing a paper layer upon the nonwoven web; and
hydrosonically bonding the nonwoven web to the paper layer.

23. The process of claim 22, further comprising the step of juxtaposing a second nonwoven web upon the surface of the paper layer prior to the hydrosonic bonding step.
